# EUROPEAN PATENT SPECIFICATION

(11) **EP 3 993 441 B1**
(45) Date of publication and mention of the grant of the patent: **10.12.2025**
(21) Application number: 19935734.4
(22) Date of filing: 05.07.2019
(51) Int. Cl.: H04R 1/08, H04R 1/02

(54) **MINIATURE FILTER AND ACOUSTIC DEVICE**
MINIATURFILTER UND AKUSTISCHE VORRICHTUNG
FILTRE MINIATURE ET DISPOSITIF ACOUSTIQUE

(30) Priority: 28.06.2019 CN 201910579444
(43) Date of publication of application: 04.05.2022
(73) Proprietor: Weifang Goertek Microelectronics Co., Ltd., Weifang, Shandong 261031 (CN)
(72) Inventor: LIN, Yujing, Weifang, Shandong 261031 (CN)
(74) Representative: Rau, Schneck & Hübner Patentanwälte Rechtsanwälte PartGmbB
(86) International application number: PCT/CN2019/094776
(87) International publication number: WO 2020/258363

(56) References cited:
- WO-A1-2018/064803
- WO-A1-2018/223389
- CN-A- 109 379 684
- CN-A- 109 379 684
- CN-A- 109 890 748
- US-A1- 2018 343 532

## Description

### TECHNICAL FIELD

The present disclosure relates to a micro-filter suitable for an acoustic device so as to filter substances such as dust, particles or/and water that are not desired to enter into the interior of the acoustic device.

### BACKGROUND

Portable computing devices such as laptops and tablets are ubiquitous, and so are portable communication devices such as smart phones. However, such devices lack enough room to accommodate a relatively large microphone or speaker. As a result, microphones and speakers are decreasing in size and are becoming more and more compact. In addition, microphones and speakers in such portable devices often need to be close to relevant acoustic input or output ports of a terminal, and thus tend to cause failure of these acoustic devices due to particle or water ingress of the microphones and speakers.

A filter film was sometimes deployed in a prior art device to prevent certain types of debris from entering components thereof. Unfortunately, such filters tend to adversely affect operation of the microphone. For example, performance of a microphone is sometimes significantly degraded when such prior art methods are used. Customers of the microphone often choose not to use such microphones in their applications due to the degraded performance.

Ordinary metal films have stress limits when making a filter film. When an ordinary metal film is under stress and exhibits compression that forms a corrugation, the pressure cannot be detected with an optical automatic detection device. In order to fabricate the filter chip structure, a film with low tensile stress is required when depositing a suitable thin metal film onto the substrate. A film without low tensile stress tend to peel, crack, crepe or otherwise detach from its substrate, inevitably resulting in frequent disposal of PB chips after putting into operation.

In addition, since an ordinary metal film is of limited strength, there is a contradiction between maintaining the strength of the film and opening holes thereon. For example, a thick film layer is necessary in order to increase the strength, however, this results in increased depth of holes opened thereon, leading to relatively large acoustic resistance and is not conducive to the performance of the acoustic device.
WO 2018/223389 A1 discloses a MEMS microphone, which comprises a MEMS microphone chip and a mesh membrane monolithically integrated with the MEMS microphone. WO 2018/064803 A1 discloses a MEMS microphone device and a membrane for sealing an acoustic port. CN 109 379 684 A1 discloses a microphone and electronic equipment.

### SUMMARY

An object of the present disclosure is to provide a new technical solution of a micro-filter.

According to a first aspect of the present disclosure, a micro-filter according to the subject-matter of claim 1 is provided.

Optionally, the amorphous metal film is metallic glass.

Optionally, the metallic glass has a glass transition temperature Tg of 150°C or higher.

Optionally, the metallic glass has a glass transition temperature Tg of 250°C or higher.

Optionally, the through holes in the film layer have an inner diameter of 1 nm to 100 µm.

Optionally, the through holes in the film layer have an inner diameter of 5 nm to 10 µm.

Optionally, the film layer has a thickness of 5 nm to 5 µm.

Optionally, the film layer has a thickness of 20 nm to 1000 nm.

Optionally, the substrate is made of polymer material, metal, silicon or SiO₂.

According to another aspect of the present disclosure, an acoustic device is provided, comprising the above micro-filter.

Optionally, the acoustic device is a microphone module or a microphone chip.

According to an embodiment of the present disclosure, by using the metallic glass as the film layer of the micro-filter, it is possible to increase the open porosity of the film layer while ensuring strength of the film layer, reduce the thickness of the film layer, make the permeation treatment easy and form smaller through holes, thereby avoiding the acoustic resistance of relatively thick traditional films after being opened due to the relatively large depth of the holes.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in the description and constitute a part of the description, illustrate embodiments of the present disclosure and, together with the description thereof, serve to explain the principles of the present disclosure.
Fig. 1 is a cross-sectional view of a micro-filter.
Fig. 2 is a cross-sectional view of the micro-filter of the present disclosure.
Fig. 3 is a cross-sectional view of the micro-filter of the present disclosure from another perspective.
Fig. 4 is a cross-sectional view of another, not-claimed, embodiment of the micro-filter of the present disclosure.
Fig. 5 is a cross-sectional view of another, not-claimed, embodiment of the micro-filter of the present disclosure.
Fig. 6 is a cross-sectional view of another, not-claimed, embodiment of the micro-filter of the present disclosure.

### DETAILED DESCRIPTION

Various exemplary embodiments of the present disclosure will now be described in detail with reference to the accompanying drawings. It should be noted that the relative arrangement, numerical expressions and numerical values of the components and steps set forth in these examples do not limit the scope of the disclosure unless otherwise specified.

The following description of at least one exemplary embodiment is in fact merely illustrative and is in no way intended as a limitation to the present disclosure and its application or use.

Techniques, methods, and apparatuses known to those of ordinary skill in the art may not be discussed in detail but where appropriate, the techniques, methods, and apparatus should be considered as part of the description.

Among all the examples shown and discussed herein, any specific value should be construed as merely illustrative and not as a limitation. Thus, other examples of exemplary embodiments may have different values.

It should be noted that similar reference numerals and letters denote similar items in the accompanying drawings, and therefore, once an item is defined in a drawing, and there is no need for further discussion in the subsequent accompanying drawings.

The micro-filter provided by the present disclosure includes a substrate and a film layer provided on the substrate. The substrate has a hollow back cavity structure and is connected to the edge of the film layer, wherein the middle area of the film layer is suspended above the back cavity, so that the film layer constitutes a cantilever bridge structure.

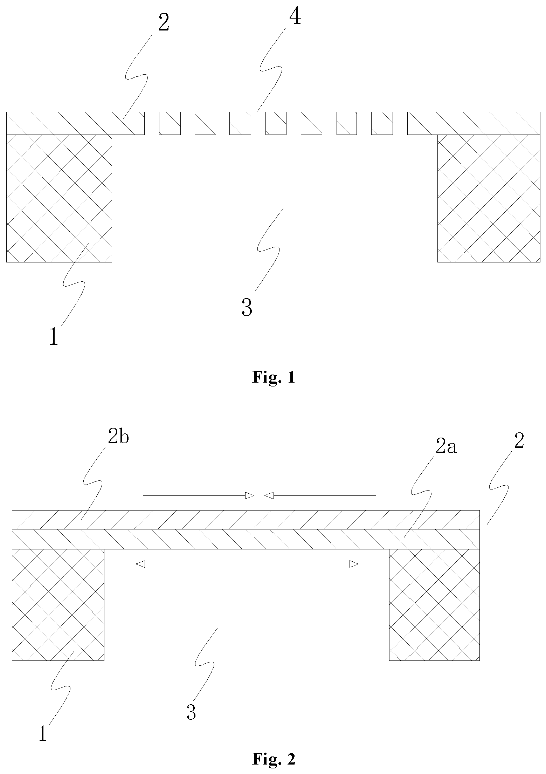

Fig. 1 shows a schematic structural diagram of a micro-filter. Referring to Fig. 1, a film layer 2 is connected to the upper part of a substrate 1 and is suspended above a hollow back cavity 3 of the substrate 1. The film layer 2 has through holes 4 for air to pass through. The substrate 1 may be made of metal, silicon or SiO₂, and the hollow back cavity 3 may be formed in a manner well known to those skilled in the art. For example, the hollow back cavity 3 is formed by a process such as etching, which will not be described in detail herein.

The film layer 2 may be a non-metallic film, such as polyimide material, SiO₂, SiN, etc. The film layer 2 may alternatively be a metal film, such as a crystalline film containing Cr, Al, Ti, or Cu.

The present disclosure adopts an amorphous metal film, such as metallic glass. The amorphous metal films may be formed by ultra-rapid cooling, physical vapor deposition, electroplating, pulsed laser deposition, solid-state reaction, ion radiation, or mechanical alloying, which belong to the common knowledge of those skilled in the art and will not be described in detail herein.

Since the metallic glass has irregular atomic arrangement but no specific slip plane, it has higher strength than crystalline metal, and has excellent fatigue performance and elastic deformation to resist deformation. Metallic glass has an elastic modulus about one third of that of crystalline metal and a tensile strength three times that of crystalline metal. For example, Mg alloy has strength of 300MPa, Mg base glass has strength of 800MPa, FeCoBSiNb metal glass has strength of 4400MPa, and SUS304 stainless steel has strength of 1400MPa.

Therefore, with metallic glass as the film layer of the micro-filter, it is possible to increase the open porosity of the film layer and reduce the thickness of the film layer while ensuring the strength of the film layer, facilitating simplify of the permeation treatment and forming of smaller through holes, thereby avoiding the acoustic resistance of relatively thick traditional films due to the relatively large depth of the through holes opened thereon.

In an alternative embodiment of the present disclosure, the through holes 4 in the film layer 2 may have an inner diameter of 1 nm to 100 µm.

In an alternative embodiment of the present disclosure, the through holes 4 in the film layer 2 may have an inner diameter of 5 nm to 10 µm.

In an alternative embodiment of the present disclosure, the film layer 2 has a thickness of 5 nm to 5 µm.

In an alternative embodiment of the present disclosure, the film layer 2 has a thickness of 20 nm to 1000 nm.

Since the metallic glass is an amorphous material, it is isotropic and uniform. In addition, there are basically no defects caused by such as grain boundaries and segregation of a polycrystalline structure, and the size effect is small. Therefore, when designing a micro-filter, it is not necessary to consider changes in physical properties due to anisotropy and size, which is beneficial to designing the structure of the micro-filter. In addition, since metallic glass is an alloy composed of multiple elements, it is possible to broaden the range of materials to be selected when designing the micro-filter, and design and manufacture a PB chip with higher performance.

For example, the metallic glass may contain multiple transition metal elements, and may optionally contain one or more non-metal elements. The metallic glass containing the transition metal elements may have at least one of Sc, Y, La, Al, Ti, Zr, Hf, V, Nb, Ta, Cr, Mo, W, Mn, Tc, Re, Fe, Ru, Os, Co, Rh, Ir, Ni, Pd, Pt, Cu, Ag, Au, Zn, Cd and Hg. Depending on the application, any suitable transition metal elements or combination thereof may be used. Any suitable non-metallic elements or combination thereof may be used. For example, non-metal elements may be any one of F, Cl, Br, I, At, O, S, Se, Te, Po, N, P, As, Sb, Bi, C, Si, Ge, Sn, Pb and B.

In an alternative embodiment of the present disclosure, the metallic glass has a glass transition temperature Tg of 150°C or higher.

In an alternative embodiment of the present disclosure, the metallic glass has a glass transition temperature Tg of 250°C or higher.

In the micro-filter of the present disclosure, there may be provided with one layer, or two, three or more layers of the film layer 2.

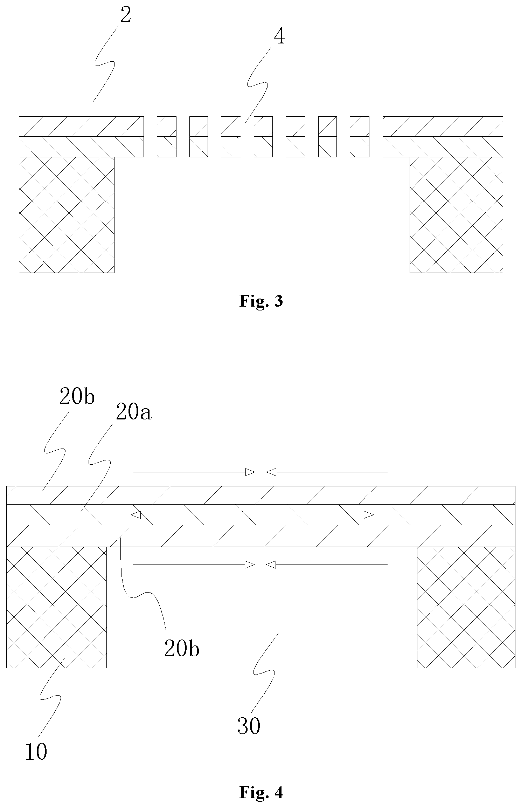

Referring to Figs. 2 and 3, the film layer includes a first diaphragm 2a and a second diaphragm 2b that are integrated together. Wherein, the first diaphragm 2a has a tensile stress, and the second diaphragm 2b has a compressive stress. After the first diaphragm and the second diaphragm are compounded together, the stress of the entire film layer 2 is reduced under the interaction of the tensile stress and the compressive stress, so that the entire film layer 2 may be placed on the substrate 1 evenly and smoothly.

The first diaphragm 2a and the second diaphragm 2b may be made of the same material or different materials. For example, the first diaphragm 2a and the second diaphragm 2b may be selected from a crystalline metal film, an amorphous metal film or a non-metal film. In order to improve the elasticity and impact resistance of the film layer 2, at least one diaphragm in the film layer 2 is the amorphous metal film.

The diaphragm may exhibit various internal stresses, such as the tensile stress and the compressive stress, depending on the deposition conditions and deposition thickness of the film. The internal stress of the diaphragm may greatly change the performance of the diaphragm, such as mechanical properties. Therefore, by compounding the diaphragm with the tensile stress and the diaphragm with the compressive stress, it is possible to eliminate the internal stress of the diaphragm and adjust the internal stress thereof to a desired stress range.

For example, in an alternative embodiment, the stress of the film layer 2 is controlled between -300 MPa (compressive stress) and 300 MPa (tensile stress).

For example, in an alternative embodiment, the stress of the film layer 2 is controlled between 0 and 300 MPa (tensile stress). By controlling the film layer 2 at a lower tensile stress, the film layer 2 may be in a tensioned state and maintain its own shape, which is beneficial to the flatness of the diaphragm 2 on the substrate 1 for optical automatic monitoring.

In an alternative embodiment, the second diaphragm 2b is provided adjacent to the substrate 1 relative to the first diaphragm 2a. The second diaphragm 2b with compressive stress is provided on the side adjacent to the substrate 1, and the first diaphragm 2a with tensile stress is used to offset the compressive stress of the second diaphragm 2b.

In an alternative embodiment, the first diaphragm 2a is provided adjacent to the substrate 1 relative to the second diaphragm 2b. The first diaphragm 2a with tensile stress is provided on the side adjacent to the substrate 1, and the second diaphragm 2b with compressive stress is used to offset the tensile stress of the first diaphragm 2a; and since the first diaphragm 2a itself has tensile stress, it is possible to further avoid problems such as separation of the first diaphragm 2a from the substrate 1.

Fig. 4 shows a schematic structural diagram of another, not-claimed, embodiment of the micro-filter of the present disclosure. Different from the embodiment shown in Fig. 2, the film layer on the substrate 10 includes a three-layer diaphragm that is suspended above the hollow back cavity 30 of the substrate 10. The three-layer diaphragm includes one layer of the first diaphragm 20a with tensile stress and two layers of the second diaphragms 20b with compressive stress. The first diaphragm 20a is located between the two layers of the second diaphragms 20b, and the three layers of diaphragms are compounded together. The second diaphragms with compressive stress located on both sides offset the tensile stress of the first diaphragm located in the middle; conversely, the first diaphragm with tensile stress located in the middle also offsets compressive stress of the second diaphragms on both sides, which will not be described in detail herein.

The three-layer diaphragm structure of the film layer may also include two layers of the first diaphragms 20a with tensile stress and one layer of the second diaphragm 20b with compressive stress. The second diaphragm 20b is located between the two layers of first diaphragm 20a.

Based on a similar principle, the first diaphragm and the second diaphragm in the film layer may be provided with a plurality of layers, for example, four layers, five layers or more. The first diaphragm and the second diaphragm are provided to be spaced apart from each other.

In an alternative embodiment of the present disclosure, the substrate is made of a photosensitive polymer material, and is shaped through an exposure process and a polymerization process. For example, in a specific embodiment of the present disclosure, the substrate may be made of epoxy resin or polyimide resin. Optionally, the epoxy resin and the polyimide resin are selected as dry film or liquid type.

The substrate is made of photosensitive polymer, for example, epoxy-based negative photoresist or photosensitive polyimide may be used, which makes the manufacturing process easy.

For example, SU-8 is a commonly used epoxy-based negative photoresist. Negativity refers to the photoresist in which the part exposed to UV becomes cross-linked, while the remaining part remains soluble and can be washed off during development.

Polyimide is a polymer of imide monomers. Polyimide has high heat resistance and has many applications in processes that require strong and durable organic materials. Polyimide may be used as photoresist, for example, "positive" and "negative" types of photoresist-based polyimide.

The micro-filter may be manufactured on a wafer at the same time. For example, when manufacturing a micro-filter, first, a film layer may be formed on a base by deposition, etching and other processes; then, the photopolymer may be bonded as a substrate by laminating; subsequently, a substrate with a back cavity is formed by exposure and polymerization; finally, the film layer is separated from the substrate.

The metal film or polyimide film is carried on the substrate of the photosensitive material, and supports the film layer through the substrate, so that the micro-filter may be made small while ensuring its structure.

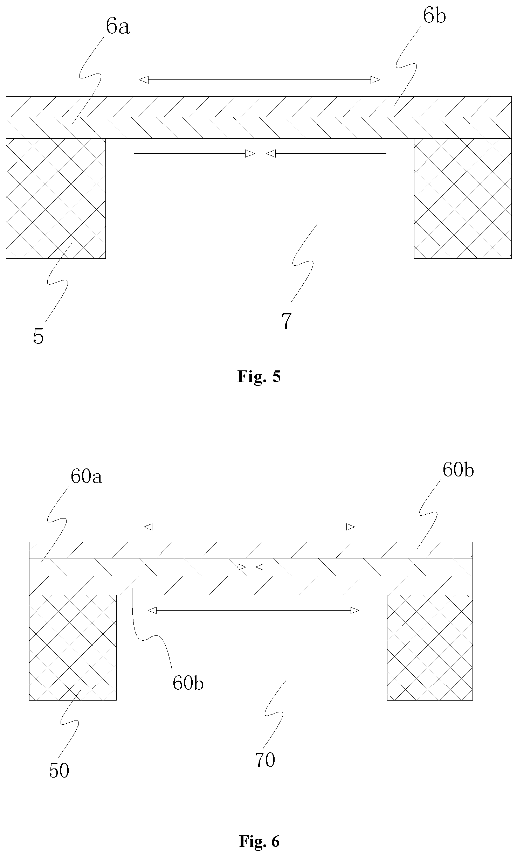

Fig. 5 shows a schematic structural diagram of another, not-claimed, embodiment of the micro-filter of the present disclosure. In the embodiment shown in Fig. 4, different from the embodiments shown in Figs. 1, 2, 3, and 4, the metal film 6a is provided on the substrate 5 and is suspended above the hollow back cavity 7 of the substrate 5. The metal film 6a may be an amorphous metal film, for example, metallic glass. The substrate 5 may be made of polymer material, metal, silicon or SiO₂.

The outer surface of the metal film 6a is coated with a nonstick layer 6b. The adhesion between the nonstick layer 6b and the particles is lower than the adhesion between the metal film 6a and the particles; the metal film 6a and the nonstick layer 6b are arranged with through holes (not shown in the figures).

In an alternative embodiment of the present disclosure, the nonstick layer 6b is a silicone compound coating or a fluoropolymer coating.

In an alternative embodiment of the present disclosure, the nonstick layer 6b is a Teflon coating. Teflon has high temperature characteristic and a low coefficient of friction.

By providing a nonstick layer on the metal film, it is possible to avoid the problem of particles sticking to the metal film with through holes after long-term use, thereby ensuring the sensitivity of the sensor.

In an alternative embodiment of the present disclosure, the metal film 6a is configured to have compressive stress; the nonstick layer 6b is configured to have tensile stress; by compounding the metal film 6a and the nonstick layer 6b together, it is possible to reduce the stress of the entire film. Of course, it is also possible that the metal film 6a is configured to have tensile stress, and the nonstick layer 6b is configured to have compressive stress. The specific principle is the same as the embodiment shown in FIG. 2 and FIG. 4, and will not be described in detail herein.

For example, in an alternative embodiment, the stress of the composite film layers is controlled between -300 MPa (compressive stress) and 300 MPa (tensile stress).

For example, in an alternative embodiment, the stress of the composite film layers is controlled between 0 and 300 MPa (tensile stress).

Fig. 6 shows a schematic structural diagram of another, not-claimed, embodiment of the micro-filter of the present disclosure. Different from the embodiment shown in Fig. 5, the film layer on the substrate 50 includes a three-layer diaphragm that is suspended above the hollow back cavity 70 of the substrate 50. The three-layer diaphragm includes one layer of the metal film 60a with compressive stress and two nonstick layers 60b with tensile stress. The metal film 60a is sandwiched between the two nonstick layers 60b, and the three layers are compounded together. The nonstick layers 60b with tensile stress located on both sides offset the compressive stress of the metal film located in the middle; conversely, the metal film 60a with compressive stress located in the middle also offsets compressive stress of the nonstick layers 60b on both sides, which will not be described in detail herein.

In addition, the nonstick layers 60b are provided on both sides of the metal film 60a, so that particle adsorption of the metal film 60a may be avoided or reduced, thereby ensuring the performance of the micro-filter.

While certain specific embodiments of the present disclosure have been illustrated by way of example, it will be understood by those skilled in the art that the foregoing examples are provided for the purpose of illustration and are not intended to limit the scope of the present disclosure. The scope of the present disclosure is subject to the attached claims.

## Claims

1. A micro-filter for an acoustic device, **characterized by** comprising a substrate (1, 5, 10, 50) with a back cavity (3, 7, 30, 70) and a film layer (2) provided on the substrate (1, 5, 10, 50) and suspended above the back cavity (3, 7, 30, 70); the film layer (2) has through holes (4) distributed thereon, and is made of an amorphous metal film,
wherein the film layer (2) includes a first diaphragm (2a) and a second diaphragm (2b) that are integrated together, wherein the first diaphragm (2a) has a tensile stress, and the second diaphragm (2b) has a compressive stress.

2. The micro-filter of claim 1, **characterized in that** the amorphous metal film is metallic glass.

3. The micro-filter of claim 2, **characterized in that** the metallic glass has a glass transition temperature Tg of 150°C or higher.

4. The micro-filter of any one of claims 2 or 3, **characterized in that** the metallic glass has a glass transition temperature Tg of 250°C or higher.

5. The micro-filter of any one of claims 1 to 4, **characterized in that** the through holes in the film layer have an inner diameter of 1 nm to 100 µm.

6. The micro-filter of any one of claims 1 to 5, **characterized in that** the through holes in the film layer have an inner diameter of 5 nm to 10 µm.

7. The micro-filter of claim any one of claims 1 to 6, **characterized in that** the film layer has a thickness of 5 nm to 5 µm.

8. The micro-filter of any one of claims 1 to 7, **characterized in that** the film layer has a thickness of 20 nm to 1000 nm.

9. The micro-filter of any one of claims 1 to 8, **characterized in that** the substrate is made of polymer material, metal, silicon or SiO₂.

10. An acoustic device, **characterized by** comprising the micro-filter of any one of claims 1 to 9.

11. The acoustic device of claim 10, **characterized in that** the acoustic device is a microphone module or a microphone chip.

## Patentansprüche

1. Mikrofilter für eine akustische Vorrichtung, **dadurch gekennzeichnet, dass** er ein Substrat (1, 5, 10, 50) mit einem Rückhohlraum (3, 7, 30, 70) und eine auf dem Substrat (1, 5, 10, 50) angeordnete und über den Rückhohlraum (3, 7, 30, 70) aufgehängte Membranschicht (2) umfasst, wobei die Membranschicht (2) angeordnete Durchgangslöcher (4) aufweist und die Membranschicht (2) aus einem amorphen Metallfilm besteht,
wobei die Membranschicht (2) eine erste Membran (2a) und eine zweite Membran (2b) umfasst, die übereinander verbunden sind, wobei die erste Membran (2a) unter Zugspannung und die zweite Membran (2b) unter Druckspannung steht.

2. Mikrofilter nach Anspruch 1, **dadurch gekennzeichnet, dass** der amorphe Metallfilm metallisches Glas ist.

3. Mikrofilter nach Anspruch 2, **dadurch gekennzeichnet, dass** das metallische Glas eine Glasübergangstemperatur Tg von 150 °C oder mehr aufweist.

4. Mikrofilter nach Anspruch 2 oder 3, **dadurch gekennzeichnet, dass** das metallische Glas eine Glasübergangstemperatur Tg von 250 °C oder mehr aufweist.

5. Mikrofilter nach einem der Ansprüche 1 bis 4, **dadurch gekennzeichnet, dass** die Durchgangslöcher in der Membranschicht einen Innendurchmesser von 1 nm bis 100 µm aufweisen.

6. Mikrofilter nach einem der Ansprüche 1 bis 5, **dadurch gekennzeichnet, dass** die Durchgangslöcher in der Membranschicht einen Innendurchmesser von 5 nm bis 10 µm aufweisen.

7. Mikrofilter nach einem der Ansprüche 1 bis 6, **dadurch gekennzeichnet, dass** die Membranschicht eine Dicke von 5 nm bis 5 µm aufweist.

8. Mikrofilter nach einem der Ansprüche 1 bis 7, **dadurch gekennzeichnet, dass** die Membranschicht eine Dicke von 20 nm bis 1000 nm aufweist.

9. Mikrofilter nach einem der Ansprüche 1 bis 8, **dadurch gekennzeichnet, dass** das Substrat aus Polymermaterial, Metall, Silizium oder SiO₂ besteht.

10. Akustische Vorrichtung, **dadurch gekennzeichnet, dass** sie einen Mikrofilter gemäß einem der Ansprüche 1 bis 9 umfasst.

11. Akustische Vorrichtung gemäß Anspruch 10, **dadurch gekennzeichnet, dass** die akustische Vorrichtung ein Mikrofonmodul oder ein Mikrofonchip ist.

## Revendications

1. Filtre miniature pour appareil acoustique, **caractérisé en ce qu'**il comprend une base (1, 5, 10, 50) pourvue d'une cavité arrière (3, 7, 30, 70), et une couche membranaire (2) disposée sur ladite base (1, 5, 10, 50) et suspendue sur ladite cavité arrière (3, 7, 30, 70) ; ladite couche membranaire (2) comporte des trous traversants (4) disposés, et ladite couche membranaire (2) est réalisée en une membrane mince de métal amorphe,
dans lequel ladite couche membranaire (2) comprend une première membrane (2a) et une seconde membrane (2b) combinées l'une à l'autre, ladite première membrane (2a) présentant une contrainte de traction et ladite seconde membrane (2b) présentant une contrainte de compression.

2. Filtre miniature selon la revendication 1, **caractérisé en ce que** la membrane mince de métal amorphe est un verre métallique.

3. Filtre miniature selon la revendication 2, **caractérisé en ce que** la température de transition vitreuse Tg du verre métallique est de 150 °C ou plus.

4. Filtre miniature selon la revendication 2 ou 3, **caractérisé en ce que** la température de transition vitreuse Tg du verre métallique est de 250 °C ou plus.

5. Filtre miniature selon l'une quelconque des revendications 1 à 4, **caractérisé en ce que** le diamètre intérieur des trous traversants de la couche membranaire est compris entre 1 nm et 100 µm.

6. Filtre miniature selon l'une quelconque des revendications 1 à 5, **caractérisé en ce que** le diamètre intérieur des trous traversants de la couche membranaire est compris entre 5 nm et 10 µm.

7. Filtre miniature selon l'une quelconque des revendications 1 à 6, **caractérisé en ce que** l'épaisseur de la couche membranaire est comprise entre 5 nm et 5 µm.

8. Filtre miniature selon l'une quelconque des revendications 1 à 7, **caractérisé en ce que** l'épaisseur de la couche membranaire est comprise entre 20 nm et 1000 nm.

9. Filtre miniature selon l'une quelconque des revendications 1 à 8, **caractérisé en ce que** la base est réalisée en un matériau polymère, en métal, en silicium ou en SiO₂.

10. Appareil acoustique, **caractérisé en ce qu'**il comprend un filtre miniature selon l'une quelconque des revendications 1 à 9.

11. Appareil acoustique selon la revendication 10, **caractérisé en ce que** l'appareil acoustique est un module microphone ou une puce microphone.
